# EUROPÄISCHE PATENTSCHRIFT

(11) **EP 3 359 432 B1**
(45) Veröffentlichungstag und Bekanntmachung des Hinweises auf die Patenterteilung: **20.05.2020**
(21) Anmeldenummer: 16775178.3
(22) Anmeldetag: 27.09.2016
(51) Int. Cl.: B60T 8/32, B60T 13/68

(54) **ELEKTRO-PNEUMATISCHE BREMSEINRICHTUNG MIT EINEM ÜBER ZWEI RÜCKSCHLAGVENTILE MIT ZWEI DRUCKLUFTVORRÄTEN VERBUNDENEN DRUCKREGELMODUL**
ELECTROPNEUMATIC BRAKE DEVICE COMPRISING A PRESSURE-REGULATING MODULE CONNECTED TO TWO COMPRESSED-AIR SUPPLIES BY MEANS OF TWO CHECK VALVES
DISPOSITIF DE FREINAGE ÉLECTROPNEUMATIQUE ÉQUIPÉ D'UN MODULE DE RÉGULATION DE PRESSION RELIÉ PAR DEUX CLAPETS À DEUX RÉSERVOIRS D'AIR COMPRIMÉ

(30) Priorität: 09.10.2015 DE 102015117284
(43) Veröffentlichungstag der Anmeldung: 15.08.2018
(73) Patentinhaber: KNORR-BREMSE Systeme für Nutzfahrzeuge GmbH, 80809 München (DE)
(72) Erfinder: RÖTHER, Friedbert, 74389 Cleebronn (DE); HECKER, Falk, 71706 Markgröningen (DE); HERGES, Michael, 80935 München (DE)
(86) Internationale Anmeldenummer: PCT/EP2016/072967
(87) Internationale Veröffentlichungsnummer: WO 2017/060128

(56) Entgegenhaltungen:
- EP-A2- 0 385 648
- WO-A1-03/106236
- WO-A1-2008/025398
- WO-A1-2008/025401
- WO-A1-2008/025404
- WO-A1-2015/114046
- WO-A2-2009/046780
- WO-A2-2010/094481
- DE-A1- 4 227 084

## Beschreibung

Die Erfindung betrifft eine elektro-pneumatische Bremseinrichtung gemäß dem Oberbegriff von Anspruch 1.

Eine elektro-pneumatische Bremseinrichtung ist beispielsweise aus WO 01/08953 A1 bekannt. Dort wird ein 1-Kanal-Druckregelmodul der Vorderachse über ein als Select-High-Ventil ausgebildetes Wechselventil entweder mit einem dem Vorderachs-Druckluftvorrat oder einem zusätzlichen Hilfs-Druckluftvorrat mit Druckluft versorgt. Wenn daher einer der Druckluftvorräte ausfällt bzw. eine Druckluftversorgungsleitung zwischen einem der Druckluftvorräte zu dem Wechselventil leckt, dann wird das 1-Kanal-Druckregelmodul immer noch von dem jeweils nicht betroffenen Versorgungskreis mit Druckluft versorgt. Es hat sich jedoch herausgestellt, dass solche Wechselventile nicht immer zuverlässig arbeiten und sie insbesondere undefinierte Zwischenstellungen einnehmen können.

In WO 2009/046780 A2 sind an zwei Druckluftvorratseingänge eines Feststellbremsmodulators jeweils ein Druckluftvorrat angeschlossen, wobei die beiden Druckluftvorratseingänge innerhalb des Feststellbremsmodulators an ein Doppelrückschlagventil angeschlossen sind, welches den höheren der Drücke der beiden Druckluftvorräte an eine interne Druckluftleitung 10 weiterleitet. Gleichzeitig verhindert das Doppelrückschlagventil ein Entweichen von Druckluft im Feststellbremsmodulator über die Druckluftvorratseingänge.

Gemäß WO 2008/025404 A1 sind an einem Bremsmodulator zwei Vorratsanschlüsse vorhanden, wobei ein erste Vorratsanschluss mit einem ersten Druckluftvorrat und ein zweiter Vorratsanschluss mit einem zweiten Druckluftvorrat verbunden ist. Jeder Druckluftvorrat versorgt mittels eines Rückschlagventils innerhalb des Bremsmodulators Ventile des Bremsmodulators mit Vorratsdruckluft.

Eine gattungsgemäße elektro-pneumatische Bremseinrichtung ist aus WO 2010/094481A2 bekannt. Dort wird ein als Baueinheit ausgeführtes Druckregelmodul mit zwei getrennt regelbaren Druckregelkanälen offenbart, wobei jedem Druckregelkanal ein eigener, an einen eigenen Druckluftvorrat anschließbarer Vorratsdruckanschluss zugeordnet ist.

Der vorliegenden Erfindung liegt demgegenüber die Aufgabe zugrunde, eine elektro-pneumatische Bremseinrichtung der oben beschriebenen Art derart weiter zu entwickeln, dass sie bei zuverlässiger Arbeitsweise einfach aufgebaut ist.

Diese Aufgabe wird erfindungsgemäß durch die Merkmale von Anspruch 1 gelöst.

### Offenbarung der Erfindung

Gemäß der Erfindung ist vorgesehen, dass der erste Vorratsanschluss über wenigstens ein erstes Rückschlagventil mit dem ersten Druckluftvorrat und über ein zweites Rückschlagventil mit dem dritten Druckluftvorrat verbunden ist, wobei die Rückschlagventile jeweils wenigstens ein durch Federkräfte wenigstens eines Federelements gegen einen Ventilsitz gedrängtes Ventilschließglied beinhalten und in Durchlassrichtung bei vom Ventilsitz abgehobenem Ventilschließglied eine Druckluftströmung von jedem der beiden Druckluftvorräte in den ersten Vorratsanschluss gestatten, aber in Sperrrichtung bei gegen den Ventilsitz gedrängtem Ventilschließglied eine Druckluftströmung vom ersten Vorratsanschluss in einen der beiden Druckluftvorräte oder in beide Druckluftvorräte sowie eine Druckluftströmung vom ersten Druckluftvorrat in den dritten Druckluftvorrat oder vom dritten Druckluftvorrat in den ersten Druckluftvorrat verhindern.

Mit anderen Worten lassen die Rückschlagventile lediglich eine Strömung von den beiden Druckluftvorräten in den Vorratsanschluss des ersten Druckregelmoduls zu, aber keine Strömung zwischen den beiden Druckluftvorräten oder aus dem Vorratsanschluss in einen Druckluftvorrat oder in beide Druckluftvorräte. Dabei kann der Fachmann die Federrate der Federelemente der Rückschlagventile nach Bedarf wählen, damit ein solches Rückschlagventil bei einer definierten Druckdifferenz zwischen seinen beiden Anschlüssen in die Durchlassstellung schalten, in welcher die beiden Anschlüsse miteinander verbunden sind und ansonsten durch die Federkräfte in Sperrstellung geschaltet ist.

Mit Hilfe dieser Maßnahmen führt ein Leck in einer Druckluftversorgungsleitung zwischen einem der Druckluftvorräte und dem Vorratsanschluss oder in einem der Druckluftvorräte nicht zu einem Ausfall des betreffenden Bremskreises, so dass eine Druckluftversorgungsredundanz wie in der eingangs genannten WO 01/08953 A1 gegeben ist.

Andererseits sind solche federvorgespannten Rückschlagventile betriebssicherer als etwa ein gemäß WO 01/08953 A1 verwendetes Wechselventil, so dass die Druckluftversorgungsredundanz zuverlässiger ist. Nicht zuletzt kann der Vorratsanschluss des ersten Druckregelmoduls auch durch Druckluft aus beiden Druckluftvorräten gleichzeitig versorgt werden, was ebenfalls einen Unterschied zum Wechselventil nach WO 01/08953 A1 darstellt, bei welchem lediglich einer der Druckluftvorräte mit dem Vorratsanschluss des 1-kanal-Druckregelmoduls der Vorderachse verbunden sein kann.

Durch die in den Unteransprüchen aufgeführten Maßnahmen sind vorteilhafte Weiterbildungen und Verbesserungen der in den unabhängigen Ansprüchen angegebenen Erfindung möglich.

Gemäß einer bevorzugten Ausführungsform ist das erste Druckregelmodul ein Vorderachs-Druckregelmodul in einem Vorderachs-Betriebsbremskreis, wobei der Arbeitsanschluss mit wenigstens zwei pneumatischen Bremszylindern der Vorderachse mittelbar oder unmittelbar verbunden ist, wobei der erste Druckluftvorrat ein Vorderachs-Druckluftvorrat des Vorderachs-Betriebsbremskreises ist. Der erste Bremsdruck ist dann der Vorderachs-Bremsdruck.

Gemäß einer Weiterbildung der bevorzugten Ausführungsform ist das erste elektro-pneumatische Druckregelmodul zusammen mit einem zweiten elektro-pneumatischen Druckregelmodul in einem 2-Kanal-Druckregelmodul als Baueinheit verbaut.

Das zweite Druckregelmodul ist bevorzugt ein Hinterachs-Druckregelmodul in einem Hinterachs-Betriebsbremskreis, wobei ein zweiter Arbeitsanschluss des zweiten Druckregelmoduls mit wenigstens zwei pneumatischen Bremszylindern der Hinterachse mittelbar oder unmittelbar verbunden ist. Da ein solches 2-Kanal-Druckregelmodul meist zentral oder im Bereich der Hinterachse angeordnet ist, ergeben sich zwischen den Druckluftvorräten und dem 2-Kanal-Druckregelmodul bzw. zwischen diesem und den an der Vorderachse angeordneten Vorderachs-Bremszylindern relativ lange Druckluftleitungen mit relativ großem Leitungsvolumen. Dieses große Leitungsvolumen würde die Gefahr bergen, dass bei einem schlagartig großen Luftbedarf, z.B. im Rahmen einer Vollbremsung nicht genügend Luftvolumen bzw. Luftdruck in den relativ langen Druckleitungen zur Verfügung gestellt werden könnte. Da jedoch bedingt durch beiden Rückschlagventile stets Druckluft aus beiden Druckluftvorräten parallel, nämlich dem ersten Druckluftvorrat und dem dritten Druckluftvorrat an den Vorratsanschluss des ersten Druckregelmoduls geliefert wird, ist auch das Druckluftversorgurigsvolumen höher als bei einer Druckluftversorgung aus nur einem Druckluftvorrat, so dass die oben beschriebenen Nachteile kompensiert werden können. Insbesondere ist dann ein kombiniertes 2-Kanal-Druckregelmodul mit je einem 1-Kanal-Druckregelmodul, je Betriebsbremskreis (Vorderachs-Betriebsbremskreis, Hinterachs-Betriebsbremskreis) mit einer zentralen oder der Hinterachse nahen Anordnung ohne die oben beschriebenen Nachteile möglich.

Dabei sind die beiden 1-Kanal-Druckregelmodule des 2-Kanal-Druckregelmoduls insbesondere vollständig kreisgetrennt, d.h. mit getrennter Druckluftversorgung, getrennten Einlass-/Auslass-Ventilkombinationen, getrennten Relaisventileinrichtungen, getrennten Back-up-Magnetventilen, getrennten Drucksensoren und getrennten Arbeitsanschlüssen, so dass das 1-Kanal-Druckregelmodul der Vorderachse ausschließlich den Bremsdruck im Vorderachs-Betriebsbremskreis und das 1-Kanal-Druckregelmodul der Hinterachse ausschließlich den Bremsdruck im Hinterachs-Betriebsbremskreis steuert.

Bevorzugt ist das zweite elektro-pneumatische Druckregelmodul analog zu dem ersten Druckregelmodul als 1-Kanal-Druckregelmodul aufgebaut und weist eine zweite Relaisventileinrichtung, eine die zweite Relaisventileinrichtung pneumatisch steuernde zweite Einlass-/Auslassmagnetventilkombination, ein zweites Back-up-Magnetventil, einen mit einem zweiten Arbeitsausgang der zweiten Relaisventileinrichtung in Verbindung stehenden zweiten Drucksensor sowie eine zweite Steuerelektronik auf, welches die zweite Einlass-/Auslassmagnetventilkombination und das zweite Back-up-Magnetventil steuert und den Druck am zweiten Arbeitsausgang repräsentierende Signale zur Regelung eines zweiten Bremsdrucks am zweiten Arbeitsanschluss empfängt. Dieser zweite Bremsdruck ist dann der Hinterachs-Bremsdruck.

Bevorzugt steht dann ein zweiter Vorratsanschluss des zweiten elektro-pneumatischen Druckregelmoduls mit einem zweiten Druckluftvorrat in Verbindung, welcher von dem ersten Druckluftvorrat und dem dritten Druckluftvorrat unabhängig ist. Dies sorgt für eine noch größere Sicherheit und Zuverlässigkeit der elektro-pneumatischen Bremseinrichtung.

Die elektro-pneumatische Bremseinrichtung umfasst weiterhin beispielsweise einen Fußbremswertgeber, welcher abhängig von einer Betätigung eines Fußbetätigungsorgans in einem elektrischen Kanal ein elektrisches Signal in die erste Steuerelektronik des ersten Druckregelmoduls und in die zweite Steuerelektronik des zweiten Druckregelmoduls und in einem Vorderachskanal einen ersten pneumatischen Steuerdruck in das erste Backup-Magnetventil und in einem Hinterachskanal einen zweiten pneumatischen Steuerdruck in das zweite Backup-Magnetventil einsteuert.

Der dritte Druckluftvorrat, welcher zusammen mit dem ersten Druckluftvorrat das erste Druckregelmodul mit Druckluft versorgt, ist bevorzugt Bestandteil eines von dem Vorderachs-Betriebsbremskreis abweichenden Nebenverbraucherkreis. Folglich wird als dritter Druckluftvorrat bevorzugt kein zusätzlicher Druckluftvorrat verwendet, sondern ein ohnehin bereits vorhandener Druckluftvorrat zur Druckluftversorgung von Nebenverbrauchern.

Gemäß einer Weiterbildung ist in einem Druckregelmodul, d.h. dem ersten Druckregelmodul und/oder in dem zweiten Druckregelmodul einem Druckregelmodul allgemein ein pneumatischer Steueranschluss einer Relaisventileinrichtung sowohl von einem von einer Einlass-/Auslassventilkombination ausgesteuerten Steuerdruck als auch von einem Back-up-Ventil ausgesteuerten Steuerdruck beaufschlagbar. Falls daher die Stromversorgung oder ein eine Steuerelektronik in einem Druckregelmodul ausfällt, dann schaltet das in seine Durchlassstellung federvorgespannte Back-up-Magnetventil unbestromt in diese Durchlassstellung, wodurch der pneumatische Steueranschluss der Relaisventileinrichtung mit dem in dem jeweiligen Kanal (Vorderachskanal oder Hinterachskanal) erzeugten Steuerdruck des Fußbremswertgebers beaufschlagt und die Relaisventileinrichtung dann auf der Basis dieses Steuerdrucks einen Bremsdruck am Arbeitsanschluss des betreffenden Druckregelmoduls erzeugen kann. In diesem Fall finde daher eine rein pneumatische Steuerung des oder der von dem Fehler oder Ausfall betroffenen Bremskreise(s) statt.

Gemäß einer alternativen Ausführungsform kann das erste Druckregelmodul auch ein beliebiges Druckregelmodul wie z.B. ein Anhängersteuermodul sein, welches in diesem Fall zwar nicht mit einem zweiten Druckregelmodul verbaut aber über den ersten Druckluftvorrat und den dritten Druckluftvorrat sowie die beiden Rückschlagventile mit Druckluft versorgt ist.

Die Erfindung betrifft auch ein Fahrzeug, insbesondere ein zum Ziehen eines Anhängers ausgebildetes Zugfahrzeug, welches eine oben beschriebene elektro-pneumatische Bremseinrichtung aufweist.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: einen Auszug aus einem schematischen Schaltplan einer bevorzugten Ausführungsform einer elektro-pneumatischen Betriebsbremseinrichtung gemäß der Erfindung;
- Fig.2A: eine schematische Darstellung eines Rückschlagventils in Sperrstellung wie es bevorzugt in der elektro-pneumatischen Betriebsbremseinrichtung nach Fig.1 verwendet wird;
- Fig.2B: eine schematische Darstellung des Rückschlagventils von Fig.2A in Öffnungsstellung.

### Beschreibung des Ausführungsbeispiels

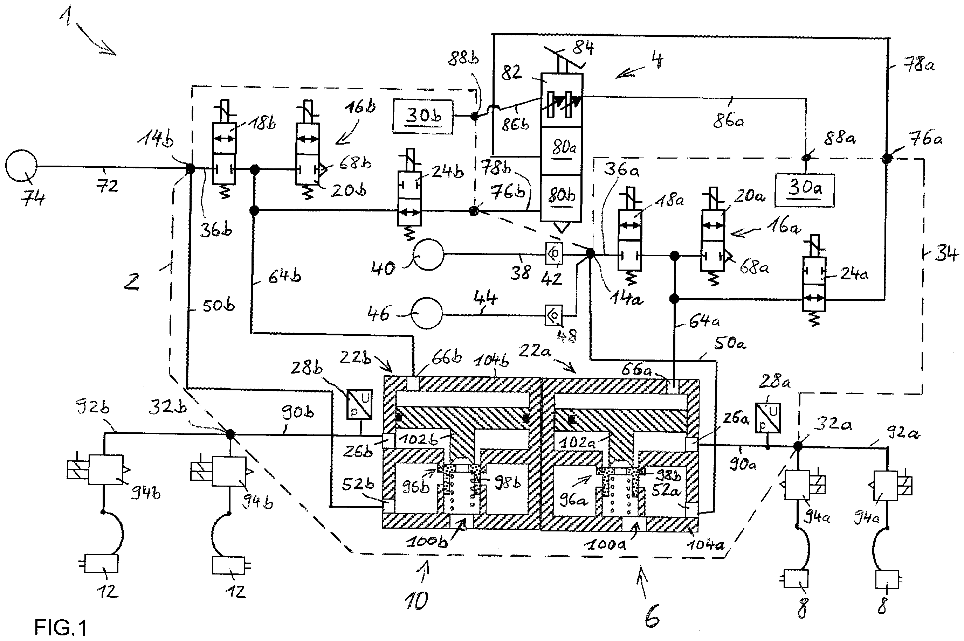

In **Fig.1** ist ein Auszug aus einem schematischen Schaltplan einer bevorzugten Ausführungsform einer elektro-pneumatischen Betriebsbremseinrichtung 1 gemäß der Erfindung wiedergegeben. Die elektro-pneumatische Betriebsbremseinrichtung 1 ist auf einem Zugfahrzeug insbesondere einem Nutzfahrzeug angeordnet, welches zum Ziehen eines Anhängers ausgebildet ist.

Von dieser elektro-pneumatischen Betriebsbremseinrichtung 1 beispielsweise in Form eines elektronisch geregelten Bremssystems mit Bremsdruckregelung (EBS) ist hier aus Maßstabsgründen ein 2-Kanal-Druckregelmodul 2 sowie ein Fußbremsmodul 4 dargestellt. Das 2-Kanal-Druckregelmodul 2 stellt eine Baueinheit dar, in dessen Gehäuse zwei separate 1-Kanal-Druckregelmodule angeordnet sind, von welchen ein erstes Druckregelmodul 6 ein Vorderachs-Druckregelmodul ist, welches den Bremsdruck in Vorderachs-Bremszylindern 8 regelt und ein zweites Druckregelmodul 10 ein Hinterachs-Druckregelmodul ist, welches den Bremsdruck in Hinterachs-Bremszylindern 12 regelt.

Jedes 1-Kanal-Druckregelmodul 6, 10 beinhaltet einen Vorratsanschluss 14a, 14b, eine mit diesem verbundene Einlass-/Auslass-Magnetventilkombination 16a, 16b mit einem Einlassventil 18a, 18b und einem Auslassventil 20a, 20b jeweils als 2/2-Wege-Magnetventile, eine von der Einlass-/Auslass-Magnetventilkombination 16a, 16b pneumatisch gesteuerte Relaisventileinrichtung 22a, 22b beispielsweise in Form eines Relaisventils, ein Backup-Magnetventil 24a, 24b, einen mit einem Arbeitsausgang 26a, 26b der Relaisventileinrichtung 22a, 22b in Verbindung stehenden Drucksensor 28a, 28b sowie eine Steuerelektronik 30a, 30b, welches die Einlass-/Auslass-Magnetventilkombination 16a, 16b und das Back-up-Magnetventil 24a, 24b steuert und den Druck am Arbeitsausgang 26a, 26b repräsentierende Signale von dem Drucksensor 28a, 28b empfängt, um an einem Arbeitsanschluss 32a, 32b des betreffenden Druckregelmoduls 6, 10 einen Bremsdruck in bekannter Weise einzuregeln. Weiterhin sind auch noch interne Druckverbindungen zwischen den genannten Bauteilen und Baugruppen von jedem Druckregelmodul 6, 10 umfasst, auf welche weiter unten noch im Einzelnen eingegangen wird. Die genannten Bauteile und Baugruppen sind in einem Gehäuse 34 des 2-Kanal-Druckregelmoduls 2 untergebracht, welches in Fig.1 durch einen in gestrichelter Linie umrahmten Kasten symbolisiert ist.

Bei dem Vorderachs-Druckregelmodul 6 steht das Einlassventil 18a eingangsseitig über eine interne Druckverbindung 36a mit einem ersten Vorratsanschluss 10 des Gehäuses 30 des 2-Kanal-Druckregelmoduls 2 in Verbindung, welcher über eine erste Versorgungsleitung mit einem ersten Druckluftvorrat 40 verbunden ist, welcher der Vorderachse zugeordnet und deshalb ein Vorderachs-Druckluftvorrat ist. In der ersten Versorgungsleitung 38 ist ein erstes Rückschlagventil 42 angeordnet. Andererseits steht der erste Vorratsanschluss 14a des Gehäuses 34 des 2-Kanal-Druckregelmoduls 2 auch über eine dritte Versorgungsleitung 44 mit einem dritten Druckluftvorrat 46 in Verbindung, in welcher ein zweites Rückschlagventil 48 angeordnet ist. Von dem ersten Vorratsanschluss 14a des Gehäuses 30 führt eine weitere interne Druckverbindung 50a zu einem ersten Vorratseingang 52a der ersten Relaisventileinrichtung 22a. Der dritte Druckluftvorrat 46 ist beispielsweise ein Druckluftvorrat für Nebenverbraucherkreise wie z.B. einen Luftfederungskreis und ist vom ersten Druckluftvorrat getrennt bzw. unabhängig. Das Hinterachs-Druckregelmodul 10 ist analog zum Vorderachs-Druckregelmodul 6 aufgebaut.

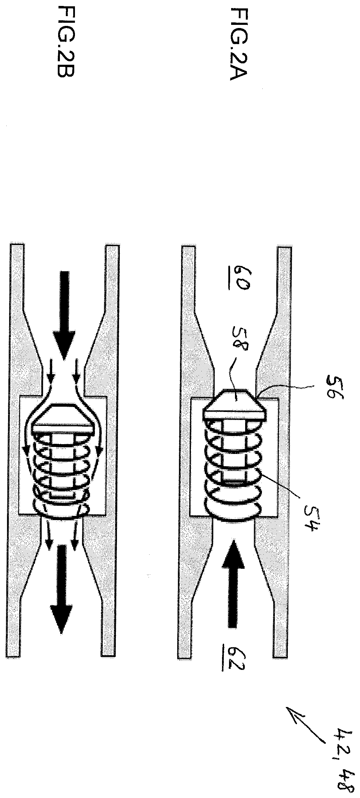

Wie aus **Fig.2A** und **Fig.2B** hervorgeht, weisen die beiden Rückschlagventile 42, 48 jeweils ein durch Federkräfte eines Federelements 54 gegen einen Ventilsitz 56 gedrängtes Ventilschließglied 58 auf. Hierbei sind ein Eingang 60 eines Rückschlagventils 42, 48 jeweils mit einem Druckluftvorrat 40, 46 und ein Ausgang 62 jeweils mit dem ersten Vorratsanschluss 14a verbunden.

In Fig.2A ist die Sperrstellung gezeigt, in welcher das Ventilschließglied 58 durch die Federkräfte des Federelements 54 gegen den Ventilsitz 56 gedrängt ist und deshalb keine Strömung von dem betreffenden Druckluftvorrat 40, 46 zum ersten Vorratsanschluss 14a möglich ist, beispielsweise, weil die Druckdifferenz zwischen dem Druck am Eingang (Vorratsdruck im Druckluftvorrat) 60 und dem Druck am Ausgang (Druck am ersten Vorratsanschluss) 62 kleiner als der Öffnungsdruck des Rückschlagventils 42, 48 ist. Fig.2B zeigt indessen die Durchlassstellung, bei welcher die Druckdifferenz zwischen dem Druck am Eingang (Vorratsdruck im Druckluftvorrat) 60 und dem Druck am Ausgang (Druck am ersten Vorratsanschluss) 62 größer oder gleich in Bezug auf den Öffnungsdruck des Rückschlagventils 42, 48 ist. In der Richtung vom Eingang 60 zum Ausgang 62 gesehen liegt daher die Durchlassrichtung der Rückschlagventile 42, 48 vor, wie durch die Pfeile in Fig.2B symbolisiert ist. Hingegen kann grundsätzlich keine Druckluftströmung vom Ausgang 62 in den Eingang 60 der Rückschlagventile 42, 48 stattfinden (Sperrrichtung), wie der Pfeil in Fig.2A zeigt, weil dann das Ventilschließglied 58 nicht nur durch die Federkräfte sondern zusätzlich auch vom Druck am Ausgang 62 gegen den Ventilsitz 56 gedrängt wird, so dass die Rückschlagventile 42, 48 im Hinblick auf die jeweilige Strömungsrichtung eine Sperrrichtung und eine Durchlassrichtung aufweisen.

Folglich gestatten die Rückschlagventile 42, 48 in Durchlassrichtung (vom Eingang 60 zum Ausgang 62) und bei Erreichen oder Überschreiten des Öffnungsdrucks, d.h. bei vom Ventilsitz 56 abgehobenem Ventilschließglied 58 eine Druckluftströmung von jedem der beiden Druckluftvorräte 40, 46 in den ersten Vorratsanschluss 14a, verhindern aber in Sperrrichtung (vom Ausgang zum Eingang) bei gegen den Ventilsitz 56 gedrängtem Ventilschließglied 58 eine Druckluftströmung vom ersten Vorratsanschluss 14a in einen der beiden Druckluftvorräte 40 oder 46 oder in beide Druckluftvorräte 40, 46. Weiterhin wird anhand von Fig.1 ersichtlich, dass die Rückschlagventile 42, 48 aufgrund ihrer Sperrrichtung eine Druckluftströmung vom ersten Druckluftvorrat 40 in den dritten Druckluftvorrat 46 oder vom dritten Druckluftvorrat 46 in den ersten Druckluftvorrat 40 verhindern.

Bei jedem Druckregelmodul 6, 10 sind die Einlassventile 18a, 18b wie auch die Auslassventile 20a, 20b als 2/2-Wege-Magnetventil ausgebildet und verbinden bestromt ihren Ausgang mit ihrem Eingang und sperren diese Verbindung unbestromt. Die Ausgänge der Einlassventile 18a, 18b stehen über interne Druckverbindungen 64a, 64b mit Steuereingängen 66a, 66b der Relaisventileinrichtungen 22a, 22b in Verbindung. Diese Steuereingänge 66a, 66b sind außerdem über die internen Druckverbindungen 64a, 64b mit Eingängen der Auslassventile 20a, 20b verbunden, welche unbestromt Verbindungen zu Entlüftungen 68a, 68b zur Atmosphäre hin sperren und bestromt diese Verbindungen herstellen.

Der zweite Vorratsanschluss 14b ist über eine zweite Versorgungsleitung 72 an einen zweiten Druckluftvorrat 74 angeschlossen, der der Hinterachse zugeordnet und deshalb ein Hinterachs-Druckluftvorrat ist. Die bisherige Beschreibung betrifft die Druckluftversorgungsseite des 2-Kanal-Druckregelmoduls 2.

Steuerdruckseitig sind hier beispielsweise zwei pneumatische Steueranschlüsse 76a, 76b an dem Gehäuse 30 des 2-Kanal-Druckregelmoduls vorhanden. Ein erster Steueranschluss 76a des Vorderachs-Druckregelmoduls 6 ist über eine Druckleitung 78a an einen pneumatischen Vorderachs-Kanal 80a eines hier zweikanaligen Betriebsbremsventils des Fußbremsmoduls 4 angeschlossen, während der zweite Steueranschluss 76b des Hinterachs-Druckregelmoduls 10 über eine Druckleitung 78b an einen pneumatischen Hinterachs-Kanal 80b des Betriebsbremsventils angeschlossen ist. Der Vorderachs-Kanal 80a ist eingangsseitig über eine hier nicht gezeigte Vorratsleitung an den ersten Druckluftvorrat 40 und der Hinterachs-Kanal 80b über eine ebenfalls nicht gezeigte Vorratsleitung an den zweiten Druckluftvorrat 74 angeschlossen, der getrennt vom ersten Druckluftvorrat 40 und vom dritten Druckluftvorrat 46 ist.

Weiterhin beinhaltet das Fußbremsmodul 4 auch einen elektrischen Kanal 82. Wenn daher ein Fußbetätigungsorgan 84 z.B. in Form einer Fußbremsplatte betätigt wird, so steuert das Fußbremsmodul 4 einerseits den Fahrerbetriebsbremswunsch repräsentierende pneumatische Backup-Steuerdrücke in den Vorderachs-Kanal 80a und in den Hinterachs-Kanal 80b und gleichzeitig über den elektrischen Kanal 82 ein elektrisches Betriebsbremsanforderungssignal über elektrische Signalleitungen 86a, 86b in die erste und zweite elektrische Signalanschlüsse 88a, 88b des Gehäuses 34, welche intern mit der ersten Steuerelektronik 30a bzw. mit der zweiten Steuerelektronik 30b verbunden sind.

Abhängig von dem elektrischen Betriebsbremsanforderungssignal und von weiteren Parametern wie beispielsweise der Achslastverteilung steuern dann die Steuerelektroniken 30a, 30b die beiden Druckregelmodule 6, 10 an, um jeweils einen der Betriebsbremsanforderung und den weiteren Parametern entsprechenden Soll-Bremsdruck an den Arbeitsausgängen 26a, 26b der Relaisventileinrichtungen 22a, 22b zu erzeugen, welche mit den Arbeitsanschlüssen 32a, 32b des Gehäuses 34 in Verbindung stehen.

Hierzu steuert eine Steuerelektronik 30a, 30b eines Druckregelmoduls 6, 10 die betreffende Einlass-/Auslassventilkombination 16a, 16b an, um einen dem Soll-Bremsdruck entsprechenden Steuerdruck am pneumatischen Steuereingang 66a, 66b der betreffenden Relaisventileinrichtung 22a, 22b zu erzeugen. Die Relaisventileinrichtung 22a, 22b moduliert dann abhängig von dem an seinem Vorratseingang 52a, 5b anstehenden Vorratsdruck einen Bremsdruck an ihrem Arbeitsausgang 26a, 26b, welcher über eine den betreffenden Drucksensor 28a, 28b beinhaltende interne Druckverbindung 90a, 90b mit dem betreffenden Arbeitsanschluss 32a, 32b verbunden ist. Jeder Arbeitsanschluss 32a, 32b ist wiederum über eine Druckleitung 92, 92b mit von den Steuerelektroniken 30a, 30b elektrisch gesteuerten ABS-Drucksteuerventilen 94a, 94b verbunden, welche den von der betreffenden Relaisventileinrichtung 22a, 22b am betreffenden Arbeitsausgang 26a, 26b ausgesteuerten Bremsdruck halten, senken oder unbeeinflusst zu den pneumatischen Bremszylindern 8, 12 durchsteuern können, je nachdem ob ein unzulässiger Bremsschlupf vorliegt oder nicht.

Der Drucksensor 28a, 28b misst dann jeweils den Ist-Bremsdruck und meldet ihn an die Steuerelektronik 30a, 30b des betreffenden Druckregelmoduls 6, 10, welches daraufhin die zugeordnete Einlass-/Auslassmagnetventilkombination 16a, 16b steuert, um den Ist-Bremsdruck an den Soll-Bremsdruck anzugleichen.

Die Relaisventileinrichtungen 22a, 22b bilden jeweils ein Relaisventil aus und beinhalten jeweils ein Doppelsitzventil 96a, 96b, welches in bekannter Weise jeweils ein Einlassventil und ein Auslassventil beinhalten, wobei das Einlassventil bei von einem Einlassventilsitz abgehobenem Ventilglied 98a, 98b öffnet und bei gegen den Einlassventilsitz gedrängten Ventilglied 98a, 98b schließt und das Auslassventil bei von einem Auslassventilsitz abgehobenem Ventilglied 98a, 98b öffnet und bei gegen den Auslassventilsitz gedrängten Ventilglied 98a, 98b schließt. Über das Einlassventil des Doppelsitzventils 96a, 96b ist dann jeweils eine mit dem Arbeitsausgang 26a, 26b in Verbindung stehende Arbeitskammer mit einer Drucklufteingangskammer und über das Auslassventil des Doppelsitzventils 96a, 96b die Arbeitskammer über eine Entlüftung 100a, 100b mit der Atmosphäre verbindbar. Die Drucklufteingangskammer einer Relaisventileinrichtung 22a, 22b ist dann jeweils mit dem ersten bzw. zweiten Vorratsanschluss 14a, 14b verbunden.

Außerdem weist jede Relaisventileinrichtung 22a, 22b einen mit einem an dem betreffenden Steuereingang 66a, 66b anstehenden Steuerdruck beaufschlagbaren Relaiskolben 102a, 102b auf. Hierzu ist der Steuereingang 66a, 66b jeweils mit einer Steuerkammer verbunden, die der Relaiskolben 102a, 102b und ein Gehäuse 104a, 104b der Relaisventileinrichtung 22a, 22b begrenzen. Der Relaiskolben 102a, 102b ist in dem Gehäuse 104a, 104b axial beweglich geführt.

Der Relaiskolben 102a, 102b betätigt über das in dem Gehäuse 104a, 104b der Relaisventileinrichtung 22a, 22b axial beweglich geführte Ventilglied 98a, 98b das Doppelsitzventil 96a, 96b. Das Ventilglied 98a, 98b ist über eine Druckfeder am Gehäuse 104a, 104b der Relaisventileinrichtung 22a, 22b gegen die Betätigungsrichtung abgestützt. Die Funktionsweise eines solchen Doppelsitzventils 96a, 96b ist hinreichend bekannt.

Ein Vorderachs-Betriebsbremskreis beinhaltet daher den elektrischen Kanal 82 für den vorrangigen elektro-pneumatischen Vorderachs-Betriebsbremskreis, den pneumatischen Vorderachs-Kanal 80a des Betriebsbremsventils für den demgegenüber nachrangigen pneumatischen Vorderachs-Betriebsbremskreis, das Vorderachs-Druckregelmodul 6 insbesondere mit der ersten Relaisventileinrichtung 22a, der ersten Einlass-/Auslassmagnetventilkombination 16a, dem ersten Backup-Magnetventil 24a, dem ersten Drucksensor 28a, den ersten Druckluftvorrat 40 und den dritten Druckluftvorrat 46 sowie die Bremszylinder 8 der Vorderachse sowie die dazugehörigen Druckverbindungen. Die ABS-Drucksteuerventile 94a an der Vorderachse sind optional.

Ein Hinterachs-Betriebsbremskreis beinhaltet den elektrischen Kanal 82 für den vorrangigen elektro-pneumatischen Hinterachs-Betriebsbremskreis, den pneumatischen Hinterachs-Kanal 80b des Betriebsbremsventils für den demgegenüber nachrangigen pneumatischen Hinterachs-Betriebsbremskreis, das Hinterachs-Druckregelmodul 10 insbesondere mit der zweiten Relaisventileinrichtung 22b, der zweiten Einlass-/Auslassmagnetventilkombination 16b, dem zweiten Back-up-Magnetventil 24b, dem zweiten Drucksensor 28b, den zweiten Druckluftvorrat 74 sowie die Bremszylinder 12 der Hinterachse sowie die dazugehörigen Druckverbindungen. Die ABS-Drucksteuerventile 94b an der Hinterachse sind ebenfalls optional.

Das 2-Kanal-Druckregelmodul 2, in welchem das Vorderachs-Druckregelmodul 6 und das Hinterachs-Druckregelmodul 10 zusammengefasst sind, ist beispielsweise an einem Rahmen des Zugfahrzeugs im Bereich der Hinterachse angeordnet. Alternativ könnte das 2-Kanal-Druckregelmodul 2 auch am Rahmen im Wesentlichen zentral zwischen Vorderachse und Hinterachse angeordnet sein.

Vor diesem Hintergrund ist die Funktionsweise der elektro-pneumatischen Betriebsbremseinrichtung 1 wie folgt:
Bei intakter Druckluftversorgung und Elektrik bzw. Elektronik wird bei einer Betätigung der Fußbremsplatte 84 zum einen ein elektrisches Betriebsbremsanforderungssignal in dem elektrischen Kanal 82 des Fußbremsmoduls 4 erzeugt und an die Steuerelektroniken 30a, 30b geleitet, welche abhängig davon und unter Umständen weiterer Parameter wie beispielsweise einer Achslastverteilung einen Soll-Bremsdruck repräsentierende Signale in die betreffenden Einlass-/Auslassmagnetventilkombinationen 16a, 16b einsteuern. Aufgrund einer bestimmten Achslastverteilung kann der Soll-Bremsdruck der Vorderachse sich beispielsweise vom Sollbremsdruck der Hinterachse unterscheiden.

Parallel hierzu werden in den beiden Kanälen des Betriebsbremsventils des Fußbremsmoduls 4 Steuerdrücke (Vorderachs-Steuerdruck, Hinterachs-Steuerdruck) erzeugt und in die pneumatischen Steueranschlüsse 76a, 76b des 2-Kanal-Druckregelmoduls 2 eingesteuert, wobei der betreffende Steuerdruck an den Eingang des betreffenden Backup-Magnetventils 24a, 24b geschleift wird, welches diesen Steuerdruck wegen seiner bestromten Sperrstellung vom Steuereingang 66a, 66b der betreffenden Relaisventileinrichtung 22a, 22b zurückhält.

Bei dem Vorderachs-Druckregelmodul 6 erfolgt die Versorgung des ersten Vorratsanschlusses 14a aus dem ersten Druckluftvorrat 40 und dem dritten Druckluftvorrat 46 in paralleler Weise. Dabei gehen die beiden Rückschlagventile 42, 48 in ihre Durchlassstellung und gestatten in ihrer Durchlassrichtung eine Druckluftströmung von den beiden Druckluftvorräten 40, 46 in den ersten Vorratsanschluss 14a zur Versorgung der ersten Einlass-/Auslassmagnetventilkombination 16a sowie der ersten Relaisventileinrichtung 22a. Die betreffende Steuerelektronik 30a, 30b steuert dann die Einlass-/Auslassmagnetventilkombination 16a, 16b des betreffenden Druckregelmoduls 6, 10 an, um am Steuereingang 66a, 66b der betreffenden Relaisventileinrichtung 22a, 22b einen dem Soll-Bremsdruck entsprechenden Steuerdruck zu erzeugen. Dieser Steuerdruck steht in der Steuerkammer der betreffenden Relaisventileinrichtung 22a, 22b an und schiebt den Relaiskolben 102a, 102b in Fig.1 nach unten, wodurch das Ventilglied 98a, 98b nach unten verschoben und jeweils das Auslassventil des Doppelsitzventils 96a, 96b geschlossen und das Einlassventil geöffnet wird. Dadurch gelangt zum einen abhängig vom jeweils gesteuerten Öffnungsquerschnitt des Einlassventils die in der Drucklufteingangskammer anstehende, vom betreffenden Druckluftvorrat 40, 46 bzw. 74 oder von den betreffenden Druckluftvorräten 40, 46, 74 herangeführte Druckluft unter Vorratsdruck zum Arbeitsausgang 26a, 26b der betreffenden Relaisventileinrichtung 22a, 22b und bildet dort einen Ist-Bremsdruck, welcher vom betreffenden Drucksensor 28a, 28b gemessen und an die betreffende Steuerelektronik 30a, 30b rückgemeldet wird. Bei einer Abweichung des Ist-Bremsdrucks vom Soll-Bremsdruck wird die betreffende Einlass-/Auslassmagnetventilkombination 16a, 16b im Abgleichsinne angesteuert. Über die beiden dem Arbeitsanschluss 32a, 32b nachgeordneten ABS-Drucksteuerventile 94a, 94b gelangt dann der Soll-Bremsdruck in die pneumatischen Bremszylinder 8 der Vorderachse bzw. in die pneumatischen Bremszylinder 12 der Hinterachse. Falls während der Betriebsbremsung ein unzulässiger Bremsschlupf detektiert werden sollte, so werden die ABS-Drucksteuerventile 94a, 94b zum Drucksenken, Druckhalten oder Druckdurchlass angesteuert, bis sich ein zulässiger Bremsschlupf einstellt.

Falls die Stromversorgung bzw. eine Steuerelektronik 30a bzw. 30b ausfällt oder beide Steuerelektroniken 30a, 30b ausfallen, so kann die betreffende Einlass-/Auslassmagnetventilkombination 30a, 30b keinen Steuerdruck mehr an den Steuereingang 66a, 66b der Relaisventileinrichtung 22a, 22b liefern. Dafür schaltet das betreffende Backup-Magnetventil 24a, 24b unbestromt in seine Durchlassstellung und lässt den betreffenden Steuerdruck (Hinterachs-Steuerdruck oder Vorderachs-Steuerdruck) am Steuereingang 66a, 66b der betreffenden Relaisventileinrichtung 22a, 22b anstehen. Dann sorgt dieser Steuerdruck dafür, dass sich in den Bremszylindern 8 der Vorderachse bzw. in den Bremszylindern 12 der Hinterachse oder an beiden Achsen ein Bremsdruck einstellt, dann jedoch ohne Bremsdruckregelung.

Falls in der ersten Versorgungsleitung 38 zwischen dem ersten Druckluftvorrat 40 und dem ersten Vorratsanschluss 14a bzw. in der dritten Versorgungsleitung 44 zwischen dem dritten Druckluftvorrat 46 und dem ersten Vorratsanschluss 14a oder auch im ersten Druckluftvorrat 40 oder im dritten Druckluftvorrat 46 selbst eine Leckage auftritt, so ist eine Versorgung des ersten Vorratsanschlusses 14a durch die jeweils intakte Versorgungsleitung 38, 44 bzw. den jeweils intakten Druckluftvorrat 40, 46 möglich, so dass das Vorderachs-Druckregelmodul 6 vollumfänglich intakt bleibt. Andererseits verhindert die Sperrrichtung der Rückschlagventile 42, 48, dass beispielsweise Druckluft aus dem intakten dritten Druckluftvorrat 46 in den lecken ersten Druckluftvorrat 40 nachströmt und sich dadurch entleert.

Selbstverständlich können die beiden Rückschlagventile 42, 48 und der dritte Druckluftvorrat 46 auch für das Hinterachs-Druckregelmodul 10 vorgesehen und mit dessen zweitem Vorratsanschluss 14b entsprechend verschaltet sein.

### Bezugszeichenliste

- 1: Betriebsbremseinrichtung
- 2: 2-Kanal-Druckregelmodul
- 4: Fußbremsmodul
- 6: erstes Druckregelmodul
- 8: VA-Bremszylinder
- 10: zweites Druckregelmodul
- 12: HA-Bremszylinder
- 14: Vorratsanschluss
- 16: Einlass-/Auslass-Magnetventilkombination
- 18: Einlassventil
- 20: Auslassventil
- 22: Relaisventileinrichtung
- 24: Backup-Magnetventil
- 26: Arbeitsausgang
- 28: Drucksensor
- 30: Steuerelektronik
- 32: Arbeitsanschluss
- 34: Gehäuse
- 36: Druckverbindung
- 38: erste Versorgungsleitung
- 40: erster Druckluftvorrat
- 42: erstes Rückschlagventil
- 44: dritte Versorgungsleitung
- 46: dritter Druckluftvorrat
- 48: zweites Rückschlagventil
- 50: Druckverbindung
- 52: Vorratseingang
- 54: Federelement
- 56: Ventilsitz
- 58: Ventilschließglied
- 60: Eingang
- 62: Ausgang
- 64: Druckverbindung
- 66: Steuereingang
- 68: Entlüftung
- 72: zweite Versorgungsleitung
- 74: zweiter Druckluftvorrat
- 76: Steueranschluss
- 78: Druckleitung
- 80: pneumat. Kanal
- 82: elektr. Kanal
- 84: Fußbetätigungsorgan
- 86: Signalleitung
- 88: Signalanschluss
- 90: Druckverbindung
- 92: Druckleitung
- 94: ABS-Drucksteuerventil
- 96: Doppelsitzventil
- 98: Ventilglied
- 100: Entlüftung
- 102: Relaiskolben
- 104: Gehäuse

## Patentansprüche

1. Elektro-pneumatische Bremseinrichtung (1) mit
a) einem ersten elektro-pneumatischen Druckregelmodul (6), welches eine erste Relaisventileinrichtung (22a), eine die erste Relaisventileinrichtung (22a) pneumatisch steuernde erste Einlass-/Auslassmagnetventilkombination (16a), ein erstes Backup-Magnetventil (24a), einen mit einem ersten Arbeitsausgang (26a) der ersten Relaisventileinrichtung (22a) in Verbindung stehenden ersten Drucksensor (28a) sowie eine erste Steuerelektronik (30a) aufweist, welches die erste Einlass-/Auslassmagnetventilkombination (16a) und das erste Backup-Magnetventil (24a) steuert und den Druck am ersten Arbeitsausgang (26a) repräsentierende Signale zur Regelung eines ersten Bremsdrucks am ersten Arbeitsausgang (26a) empfängt,
b) einem ersten, mit einem ersten Vorratseingang (52a) der ersten Relaisventileinrichtung (22a) sowie mit einem Einlassventil (18a) der Einlass-/Auslassmagnetventilkombination (16a) in Verbindung stehenden Vorratsanschluss (14a) des ersten Druckregelmoduls (6), wobei
c) der erste Arbeitsausgang (26a) der ersten Relaisventileinrichtung (22a) mit einem ersten Arbeitsanschluss (32a) des ersten Druckregelmoduls (6) in Verbindung steht, welcher direkt oder indirekt mit wenigstens einem ersten pneumatischen Bremszylinder (8) verbunden ist, und wobei
d) der erste Vorratsanschluss (14a) des ersten Druckregelmoduls (6) mit einem ersten Druckluftvorrat (40) verbunden ist, **dadurch gekennzeichnet, dass**
e) der erste Vorratsanschluss (14a) des ersten Druckregelmoduls (6) mit einem dritten Druckluftvorrat (46) verbunden ist, welcher unabhängig von dem ersten Druckluftvorrat (40) ist, wobei
f) der erste Vorratsanschluss (14a) über wenigstens ein erstes Rückschlagventil (42) mit dem ersten Druckluftvorrat (40) und über wenigstens ein zweites Rückschlagventil (48) mit dem dritten Druckluftvorrat (46) verbunden ist, wobei
g) die Rückschlagventile (42, 48) jeweils wenigstens ein durch Federkräfte wenigstens eines Federelements (54) gegen einen Ventilsitz (56) gedrängtes Ventilschließglied (58) beinhalten und in Durchlassrichtung bei vom Ventilsitz (56) abgehobenem Ventilschließglied (56) eine Druckluftströmung von jedem der Druckluftvorräte (40, 46) oder auch von beiden Druckluftvorräten (40, 46) gleichzeitig in den ersten Vorratsanschluss (14a) gestatten, aber in Sperrrichtung bei gegen den Ventilsitz (56) gedrängtem Ventilschließglied (58) eine Druckluftströmung vom ersten Vorratsanschluss (14a) in einen der beiden Druckluftvorräte (40, 46) oder in beide Druckluftvorräte (40, 46) sowie eine Druckluftströmung vom ersten Druckluftvorrat (40) in den dritten Druckluftvorrat (46) oder vom dritten Druckluftvorrat (46) in den ersten Druckluftvorrat (40) verhindern.

2. Bremseinrichtung nach Anspruch 1, **dadurch gekennzeichnet, dass** das erste Druckregelmodul (6) ein Vorderachs-Druckregelmodul in einem Vorderachs-Betriebsbremskreis ist, wobei der erste Arbeitsanschluss (32a) mit wenigstens zwei pneumatischen Bremszylindern (8) der Vorderachse mittelbar oder unmittelbar verbunden ist, wobei der erste Druckluftvorrat (40) ein Vorderachs-Druckluftvorrat des Vorderachs-Betriebsbremskreises ist.

3. Bremseinrichtung nach Anspruch 2, **dadurch gekennzeichnet, dass** das erste elektro-pneumatische Druckregelmodul (6) zusammen mit einem zweiten elektro-pneumatischen Druckregelmodul (10) in einem 2-Kanal-Druckregelmodul (2) als Baueinheit verbaut ist, wobei das zweite Druckregelmodul (10) ein Hinterachs-Druckregelmodul in einem Hinterachs-Betriebsbremskreis und ein zweiter Arbeitsanschluss (32b) des zweiten Druckregelmoduls (10) mit wenigstens zwei pneumatischen Bremszylindern (12) der Hinterachse mittelbar oder unmittelbar verbunden ist.

4. Bremseinrichtung nach Anspruch 3, **dadurch gekennzeichnet, dass** das zweite elektro-pneumatischen Druckregelmodul (10) eine zweite Relaisventileinrichtung (22b), eine die zweite Relaisventileinrichtung (22b) pneumatisch steuernde zweite Einlass-/Auslassmagnetventilkombination (16b), ein zweites Back-up-Magnetventil (24b), einen mit einem zweiten Arbeitsausgang (26b) der zweiten Relaisventileinrichtung (22b) in Verbindung stehenden zweiten Drucksensor (28b) sowie eine zweite Steuerelektronik (30b) aufweist, welche die zweite Einlass-/Auslassmagnetventilkombination (16b) und das zweite Back-up-Magnetventil (24b) steuert und den Druck am zweiten Arbeitsausgang (26b) repräsentierende Signale zur Regelung eines zweiten Bremsdrucks am zweiten Arbeitsanschluss (32b) empfängt.

5. Bremseinrichtung nach Anspruch 4, **dadurch gekennzeichnet, dass** ein zweiter Vorratsanschluss (14b) des zweiten elektro-pneumatischen Druckregelmoduls (10) mit einem zweiten Druckluftvorrat (74) in Verbindung steht, welcher von dem ersten Druckluftvorrat (40) und dem dritten Druckluftvorrat (46) unabhängig ist.

6. Bremseinrichtung nach Anspruch 4 oder 5, **dadurch gekennzeichnet, dass** sie einen Fußbremswertgeber (4) umfasst, welcher abhängig von einer Betätigung eines Fußbetätigungsorgans (84) in einem elektrischen Kanal (82) ein elektrisches Signal wenigstens in die erste Steuerelektronik (30a) und in die zweite Steuerelektronik (30b) und in einem pneumatischen Vorderachskanal (80a) einen ersten pneumatischen Steuerdruck in das erste Backup-Magnetventil (24a) und in einem Hinterachskanal (80b) einen zweiten pneumatischen Steuerdruck in das zweite Backup-Magnetventil (24b) einsteuert.

7. Bremseinrichtung nach einem der Ansprüche 3 bis 6, **dadurch gekennzeichnet, dass** der dritte Druckluftvorrat (46) Bestandteil eines von dem Vorderachs-Betriebsbremskreis abweichenden Nebenverbraucherkreises ist.

8. Bremseinrichtung nach einem der Ansprüche 3 bis 7, **dadurch gekennzeichnet, dass** in wenigstens einem Druckregelmodul der ersten und zweiten Druckregelmodule (6, 10) ein pneumatischer Steuereingang (66a, 66b) einer Relaisventileinrichtung (22a, 22b) sowohl von einem von einer Einlass-/Auslassventilmagnetkombination (16a, 16b) ausgesteuerten Steuerdruck als auch von einem von einem Backup-Magnetventil (24a, 24b) ausgesteuerten Steuerdruck beaufschlagbar ist.

9. Bremseinrichtung nach Anspruch 1, **dadurch gekennzeichnet, dass** das erste Druckregelmodul ein Anhängersteuermodul ist.

10. Fahrzeug, insbesondere zum Ziehen eines Anhängers ausgebildetes Zugfahrzeug, mit einer elektro-pneumatischen Bremseinrichtung (1) nach einem der vorhergehenden Ansprüche.

## Claims

1. An electro-pneumatic brake device (1), having
a) a first electro-pneumatic pressure regulating module (6) that has a first relay valve device (22a), a first inlet/outlet solenoid valve combination (16a) that pneumatically controls the first relay valve device (22a), a first backup solenoid valve (24a), a first pressure sensor (28a) connected to a first working outlet (26a) of the first relay valve device (22a), and a first electronic control system (30a) that controls the first inlet/outlet solenoid valve combination (16a) and the first backup solenoid valve (24a) and receives signals representing the pressure at the first working outlet (26a) in order to regulate a first brake pressure at the first working outlet (26a),
b) a first supply port (14a) of the first pressure regulating module (6), which first supply port is connected to a first supply inlet (52a) of the first relay valve device (22a) and to an inlet valve (18a) of the inlet/outlet solenoid valve combination (16a),
c) the first working outlet (26a) of the first relay valve device (22a) being connected to a first working port (32a) of the first pressure regulating module (6) that is connected directly or indirectly to at least one first pneumatic brake cylinder (8), and
d) the first supply port (14a) of the first pressure regulating module (6) being connected to a first compressed-air supply (40), **characterised in that**
e) the first supply port (14a) of the first pressure regulating module (6) is connected to a third compressed-air supply (46) that is independent of the first compressed-air supply (40),
f) the first supply port (14a) being connected to the first compressed-air supply (40) via at least one first check valve (42) and to the third compressed-air supply (46) via at least one second check valve (48),
g) the check valves (42, 48) each comprising at least one valve closing element (58) that is forced by spring forces exerted by at least one spring element (54) against a valve seat (56) and permitting compressed air to flow in the forward direction from either of the compressed-air supplies (40, 46) or from both compressed-air supplies (40, 46) simultaneously into the first supply port (14a) when the valve closing element (56) is lifted off the valve seat (56) but preventing compressed air from flowing in the reverse direction from the first supply port (14a) into one of the two compressed-air supplies (40, 46) or into both of the compressed-air supplies (40, 46) and from flowing in the reverse direction from the first compressed-air supply (40) into the third compressed-air supply (46) or from the third compressed-air supply (46) into the first compressed-air supply (40) when the valve closing element (58) is forced against the valve seat (56).

2. A brake device according to claim 1, **characterised in that** the first pressure regulating module (6) is a front-axle pressure regulating module in a front-axle service brake circuit, the first working port (32a) being connected indirectly or directly to at least two pneumatic brake cylinders (8) on the front axle, the first compressed-air supply (40) being a front-axle compressed-air supply of the front-axle service brake circuit.

3. A brake device according to claim 2, **characterised in that** the first electro-pneumatic pressure regulating module (6) is fitted together with a second electro-pneumatic pressure regulating module (10) as a unit in a 2-channel pressure regulating module (2), the second pressure regulating module (10) being a rear-axle pressure regulating module in a rear-axle service brake circuit and a second working port (32b) of the second pressure regulating module (10) being connected indirectly or directly to at least two pneumatic brake cylinders (12) on the rear axle.

4. A brake device according to claim 3, **characterised in that** the second electro-pneumatic pressure regulating module (10) has a second relay valve device (22b), a second inlet/outlet solenoid valve combination (16b) that pneumatically controls the second relay valve device (22b), a second backup solenoid valve (24b), a second pressure sensor (28b) connected to a second working outlet (26b) of the second relay valve device (22b), and a second electronic control system (30b) that controls the second inlet/outlet solenoid valve combination (16b) and the second backup solenoid valve (24b) and receives signals representing the pressure at the second working outlet (26b) in order to regulate a second brake pressure at the second working port (32b).

5. A brake device according to claim 4, **characterised in that** a second supply port (14b) of the second electro-pneumatic pressure regulating module (10) is connected to a second compressed-air supply (74) that is independent of the first compressed-air supply (40) and of the third compressed-air supply (46).

6. A brake device according to claim 4 or 5, **characterised in that** it comprises a footbrake transducer (4) that inputs an electrical signal into at least the first electronic control system (30a) and the second electronic control system (30b) in an electrical channel (82), inputs a first pneumatic control pressure into the first backup solenoid valve (24a) in a pneumatic front-axle channel (80a) and inputs a second pneumatic control pressure into the second backup solenoid valve (24b) in a rear-axle channel (80b) independently of any actuation of a foot-operated actuating element (84).

7. A brake device according to any one of claims 3 to 6, **characterised in that** the third compressed-air supply (46) is a constituent part of a secondary consumer circuit that differs from the front-axle service brake circuit.

8. A brake device according to any one of claims 3 to 7, **characterised in that** in at least one pressure regulating module of the first and second pressure regulating modules (6, 10) both a control pressure output by an inlet/outlet solenoid valve combination (16a, 16b) and a control pressure output by a backup solenoid valve (24a, 24b) can be applied to a pneumatic control port (66a, 66b) of a relay valve device (22a, 22b).

9. A brake device according to claim 1, **characterised in that** the first pressure regulation module is a trailer control module.

10. A vehicle, in particular a tractor vehicle designed to tow a trailer, having an electro-pneumatic brake device (1) according to any one of the preceding claims.

## Revendications

1. Dispositif (1) électropneumatique de freinage, comprenant
a) un premier module (6) électropneumatique de régulation de la pression, qui a un premier dispositif (22a) de vanne relais, une première combinaison (16a) d'électrovanne d'entrée/sortie commandant pneumatiquement le premier dispositif (22a) de vanne relais, une première électrovanne (24a) de backup, un premier capteur (28a) de pression en liaison avec une première sortie (26a) de travail du premier dispositif (22a) de vanne relais, ainsi qu'une première électronique (30a) de commande, qui commande la première combinaison (16a) d'électrovanne d'entrée/sortie et la première électrovanne (24a) de backup et qui, pour la régulation d'une première pression de freinage à une première sortie (26a) de travail, reçoit des signaux représentant la pression à la première sortie (26a) de travail,
b) un raccord (14a) de réservoir, en liaison avec une première entrée (52a) de réservoir du premier dispositif (22a) de vanne relais, ainsi qu'avec une vanne (18a) d'entrée de la combinaison (16a) d'électrovanne d'entrée/sortie, du premier module (6) de régulation de la pression,
dans lequel
c) la première sortie (26a) de travail du premier dispositif (22a) de vanne relais est en liaison avec un premier raccord (32a) de travail du premier module (6) de régulation de la pression, qui est relié, directement ou indirectement, à au moins un premier cylindre (8) de frein pneumatique, et dans lequel
d) le premier raccord (14a) de réservoir du premier module (6) de régulation de la pression est relié à un premier réservoir (40) d'air comprimé, **caractérisé en ce que**
e) le premier raccord (14a) de réservoir du premier module (6) de régulation de la pression est relié à un troisième réservoir (46) d'air comprimé, qui est indépendant du premier réservoir (40) d'air comprimé, dans lequel
f) le premier raccord (14a) de réservoir est relié au premier réservoir (40) d'air comprimé par au moins un premier clapet antiretour (42) et au troisième réservoir (46) d'air comprimé par au moins un deuxième clapet antiretour (48), dans lequel
g) les clapets antiretour (42, 48) comportent chacun au moins un obturateur (58) de vanne refoulé sur un siège (56) de vanne par des forces d'au moins un élément (54) de ressort et autorisent, dans un sens de passage, alors que l'obturateur (58) de vanne est soulevé du siège (56) de vanne, un passage d'air comprimé de chacun des réservoirs (40, 46) d'air comprimé ou également des deux réservoirs (40, 46) d'air comprimé, simultanément, dans le premier raccord (14a) de réservoir, mais dans le sens d'arrêt, alors que l'obturateur (58) de vanne est refoulé sur le siège (56) de vanne, empêche un passage d'air comprimé du premier raccord (14a) de réservoir à l'un des deux réservoirs (40, 46) d'air comprimé ou aux réservoirs (40, 46) d'air comprimé, ainsi qu'un passage d'air comprimé du premier réservoir (40) d'air comprimé au troisième réservoir (46) d'air comprimé ou du troisième réservoir (46) d'air comprimé au premier réservoir (40) d'air comprimé.

2. Dispositif de freinage suivant la revendication 1, **caractérisé en ce que** le premier module (6) de régulation de la pression est un module de régulation de la pression d'essieu avant dans un circuit de frein de service d'essieu avant, le premier raccord (32a) de travail communiquant, indirectement ou directement, avec au moins deux cylindres (8) de frein pneumatiques de l'essieu avant, le premier réservoir (40) d'air comprimé étant un réservoir d'air comprimé d'essieu avant du circuit de frein de service d'essieu avant.

3. Dispositif de freinage suivant la revendication 2, **caractérisé en ce que** le premier module (6) électropneumatique de régulation de la pression est, ensemble avec un deuxième module (10) électropneumatique de régulation de la pression, constitué en un module (2) de régulation de la pression à deux canaux, sous la forme d'une unité de construction, le deuxième module (10) de régulation de la pression étant un module de régulation de la pression d'essieu arrière dans un circuit de frein de service d'essieu arrière et un deuxième raccord (32b) de travail du deuxième module (10) de régulation de la pression étant relié, directement ou indirectement, à au moins deux cylindres (12) de frein pneumatiques de l'essieu arrière.

4. Dispositif de freinage suivant la revendication 3, **caractérisé en ce que** le deuxième module (10) électropneumatique de régulation de la pression a un deuxième dispositif (22b) de vanne relais, une deuxième combinaison (16b) d'électrovanne d'entrée/sortie commandant pneumatiquement le deuxième dispositif (22b) de vanne relais, une deuxième électrovanne (24b) de backup, un deuxième capteur (28b) de pression en liaison ave une deuxième sortie (26b) de travail du deuxième dispositif (22b) de vanne relais, ainsi qu'une deuxième électronique (30b) de commande, qui commande la deuxième combinaison (16b) d'électrovanne d'entrée/sortie et la deuxième électrovanne (24b) de backup et qui, pour la régulation d'une deuxième pression de freinage au deuxième raccord (32b) de travail, reçoit des signaux représentant la pression à la deuxième sortie (26b) de travail.

5. Dispositif de freinage suivant la revendication 4, **caractérisé en ce qu'**un deuxième raccord (14b) de réservoir du deuxième module (10) électropneumatique de régulation de la pression est en liaison avec un deuxième réservoir (74) d'air comprimé, qui est indépendant du premier réservoir (40) d'air comprimé et du troisième réservoir (46) d'air comprimé.

6. Dispositif de freinage suivant la revendication 4 ou 5, **caractérisé en ce qu'**il comprend un indicateur (4) de valeur de frein au pied, qui, en fonction d'un actionnement d'un organe (84) d'actionnement au pied, envoie, dans un canal (82) électrique, un signal électrique, au moins à la première électronique (30a) de commande et à la deuxième électronique (30b) de commande, et dans un canal (80a) pneumatique d'essieu avant, une première pression pneumatique de commande à la première électrovanne (24a) de backup, et dans un canal (82b) d'essieu arrière; une deuxième pression pneumatique de commande à la deuxième électrovanne (24b) de backup.

7. Dispositif de freinage suivant l'une des revendications 3 à 6, **caractérisé en ce que** le troisième réservoir (46) d'air comprimé fait partie d'un circuit de consommateur secondaire différent du circuit de frein de service d'essieu avant.

8. Dispositif de freinage suivant l'une des revendications 3 à 7, **caractérisé en ce que**, dans au moins un module de régulation de la pression parmi les premier et deuxième modules (6, 10) de régulation de la pression, une entrée (66a, 66b) de commande pneumatique d'un dispositif (22a, 22b) de vanne relais peut être alimenté à la fois par une pression de commande venant d'une combinaison (16a, 16b) d'électrovanne d'entrée/sortie et par une pression de commande venant d'une électrovanne (24a, 24b) de backup.

9. Dispositif de freinage suivant la revendication 1, **caractérisé en ce que** le premier module de régulation de la pression est un module de commande de remorque.

10. Véhicule, notamment véhicule tracteur, constitué pour remorquer une remorque, comprenant un dispositif (1) électropneumatique de freinage suivant l'une des revendications précédentes.
